Europäisches Patentamt

**European Patent Office**

**Office européen des brevets**

(11) Publication number: **0 100 383**

**A1**

(12) # EUROPEAN PATENT APPLICATION

(21) Application number: **82304099.3**

(22) Date of filing: **03.08.82**

(51) Int. Cl.³: **H 01 R 13/64**
**B 60 R 16/02, H 01 M 2/34**
**H 02 J 7/00**

(43) Date of publication of application:
**15.02.84 Bulletin 84/7**

(84) Designated Contracting States:
**BE DE FR GB IT NL**

(71) Applicant: **Colbrese, Nick P.**
**1840 W. 187th Street**
**Homewood Illinois 60430(US)**

(72) Inventor: **Colbrese, Nick P.**
**1840 W. 187th Street**
**Homewood Illinois 60430(US)**

(74) Representative: **Orchard, Oliver John**
**JOHN ORCHARD & CO. Staple Inn Buildings North High Holborn**
**London WC1V 7PZ(GB)**

(54) **Improved vehicle-residential battery access system.**

(57) An improved system for conveniently and safely accessing and utilizing the electrical system and storage battery of a vehicle, allowing safe and rapid connection of said system to other vehicle's electrical systems, to auxiliary electrical apparatus, or to compatable storage batteries for jump starting, for supplying power to external devices, or for emergency electrification of the home. The present invention obtains these results while protecting against shorted circuits, faulty connections or improper voltage polarities. The apparatus is amenable to automotive, marine, aircraft, industrial or stationary use for temporary, emergency or permanent connections.

FIG.I

Croydon Printing Company Ltd

# IMPROVED VEHICLE-RESIDENTIAL BATTERY ACCESS SYSTEM

The present invention relates in general to access. and utilization systems for electrical power supply systems and equipment, and in particular to an improved access and utilization system for permanent or emergency connection of external power sources or loads, including the home power distribution wiring system, to the storage battery electtrical system of an automobile.

Modern automobiles, vehicles, and many stationary power sources commonly utilize electrical systems to start the respective engines and to operate other associated equipment. These electrical systems generally rely upon and utilize storage batteries to supply the necessary electric current.

Although such systems are generally reliable, it is often necessary or desirable to supply electrical current to the system from an external source to supplement the output of the storage battery, such as when the storage battery is in a discharged or depleted condition. Conversely, it is desirable to be able to supply electric current from the automotive system to other such systems which may be similarly depleted.

Many homes today rely extensively upon an uninterrupted supply of electricity in order to maintain indispensible functions of modern life. For example, electric sump pumps are often required to prevent flooding or foundation erosion, particularly during heavy rainstorms. Further,

2

many homes utilize gas, oil or other types of forced air or circulated hot water heating systems. Although the requisite combustible material may be available to such furnaces during power outages, electricity is still needed to run the various fan motors, pumps and electrical relays which are necessary for such heating systems to operate.

Therefore, it is desirable to be able to energize the home electrical distribution system during periods of power outage to maintain such functions, and is desirable to utilize the available potential of the automotive electrical system to provide such electrification. An appropriate access, connection and conversion system is thus required.

In addition to the foregoing, it is also often convenient and desirable to be able to readily insert or remove the storage battery from an associated automobile electrical system. For example, discharged batteries may be removed for recharging and then reinstalled, or may be exchanged for previously charged batteries, thereby insuring that the automobile's power system will be in top readiness for uses as described above.

There are many dangers and difficulties associated with performing the aforementioned tasks of accessing, connecting to, and utilizing the storage battery electrical system of a vehicle. Because very high currents may typically be involved, it is necessary to insure that electrical connections are secure. Further, sparks often result when such connections are made, and these sparks may ignite hydrogen gas and other flammable vapors or fluids associated with an automobile's storage battery and engine. In addition, modern vehicles typically employ electronic and other electrical equipment which may be seriously damaged if electrical current of improper voltage polarity is attached. Further, typical methods of connecting storage batteries to automotive systems and to external devices are cumbersome, difficult to apply or remove, and prone to corrosion.

Therefore, it is desirable to have a system which will permit secure and corrision free access to a vehicle's electrical system, will minimize the danger of incorrect polarity of connection, will permit rapid, secure and corrosion free connection to the storage battery, and will permit such advantageous connections to be made quickly, even under adverse conditions.

Previous devices have attempted to provide some of the aforementioned qualities. Among these are Applicant's prior patent, U.S. Pat. No. 4,157,592 issued June 5, 1979. However, sucn devices have not completely or adequately provided all of the desirable functions or qualities. The present invention provides such an an improved and useful system.

The advantages offered by the present invention are tnat tne system described provides the necessary safety and protection against short circuits and incorrect voltage polarity, by insuring that only proper connections can be effected, or by informing the operator when incorrect connections are made in a manner best designed to draw the potentially dangerous condition to the attention of the operator. Further safety is achieved by providing a system that permits such access to an automotive power system to be made external to the engine compartment of the automobile.

Convenience is enhanced by providing a system which may be permanently attached to the automotive electrical system and stored within the engine compartment, whereby it is always available for unexpected emergency use. Finally, flexibility is achieved by providing a system which is amenable to supplying electrical current to a diversity of external loads, including the ability to energize a home electrical distribution wiring system for emergency maintenance of essential functions. These and other objects and advantages of the invention shall be apparent in light of the present specification.

The resulting system includes a first electrical cable assembly which is designed to be permanently or semi-permanently attached to the electrical system of a first automobile, a second cable assembly designed for attachment of an external load to the first vehicle's electrical system, and a connecting adapter designed to permit these two cable assemblies to be electrically joined.

In order to insure that correct voltage polarity is maintained in such connections, the male plugs associated with the cable assemblies are geometrically polarized such that they may cooperate with the female sockets of the connecting adapter in one physical and electrical orientation only.

5

The connecting adapter in the preferred embodiment includes a multiplicity of female sockets designed to cooperate with the male plugs, wherein the respective electrical contacts of the female sockets are electrically connected so that a male plug inserted into one of the multiplicity of female sockets is thereby electrically connected in proper polarity to a similar male plug inserted into another of the multiplicity of sockets.

In order to warn the operator when an accidental situation of incorrect voltage polarity exists with respect to the second cable assembly, the present invention further includes a polarity indicator. In the preferred embodiment, this indicator provides audio or visual warning when the second cable assembly has been incorrectly attached. Further, the present invention provides such polarity indicator within the housing of the male plug itself. This is important for the access system will be advantageously utilized by making the connection between any two electrical systems by the final act of plugging the male plug of one system into the male plug and connecting adapter combination of a second system. Therefore, inclusion of the polarity indicator into the male plug assures that the warning will be delivered most directly to the operator prior to the final connection being made, thereby maximizing the probability that such warning will be noted.

In another embodiment of the present invention, the aforementioned connection to the storage battery or electrical system of the automobile is accomplished by attaching the male plug of the access system directly to the battery itself by means of a female socket which is integral to the storage

6

battery. Such a female socket may be attached to or may be molded integrally into the case of such a storage battery, with the electrical contacts of such socket being internally connected to the power bus of the battery so as to provide direct access to the battery's electrical capacity. Such a battery may further include alternative standard top or side mounted binding posts or, in the preferred embodiment, may include a multiplicity of such integral female sockets. Further, in one embodiment, a first cable assembly attached to the automobile electrical system may be utilized in conjunction with one of the multiplicity of female sockets to provide the requisite electrical connection of the storage battery to the automobile electrical system, thereby permitting rapid and corrosion-free plugwise connection of the storage battery to the automobile, facilitating the installation and removal of the battery.

The second cable assembly of the present invention may be utilized to attach many forms of external loads to the automotive system. In one embodiment, spring biased clamps are provided to permit temporary connection to other vehicle electrical systems which are not equipped with a corresponding battery access system, such as for jump starting. Alternatively, emergency lighting or other electrical equipment may be connected directly to the second cable assembly.

In another embodiment, such external equipment includes an electrical converter for converting the electrical output of the the vehicle, which is generally a direct current, to a second electrical power output which may be of an elevated voltage alternating current, such as that typically supplied to the home by power utilities for operation of lighting equipment and appliances. In this manner, the battery access and utilization system may be used to supply standard electrical power to remote locations, or may be used to supply emergency power for the operation of necessary equipment to the home during periods of utility power outage. In relation to such emergency home use, standard or specialized connectors may be used to permit connection of the converter directly to the home power distribution wiring system, whereby the home distribution system is energized, thereby supplying and distributing necessary electrical power to the appropriate appliances and equipment.

One way of carrying out the invention is described in detail below with reference to the drawings which illustrate only certain specific embodiments, in which:

Fig. 1 is an exploded elevational view of one embodiment of the battery access system, showing particularly tne relationship between the male plugs and the female adapter;

Fig. 2 is a schematic representation of a typical application of the present invention for interconnection of the electrical systems of two automobiles;

Fig. 3 is a cross-sectional view of the preferred embodiment of the female adapter;

Fig. 4 of the drawings is an exploded view of a repsesentative system incorporating an integrated storage battery and female socket unit, an appropriate male plug cable assembly for connecting the battery to a first automobile electrical system, an electrical extension for connecting the battery to external devices, and corresponding caps for sealing and protecting the electrical plugs and sockets;

Fig. 5 is an exploded elevational view of another embodiment of the invention illustating use of a converter means;

Fig. 6 is a side elevational view of another embodiment of the system with converter means comprising an electric motor coupled to an electric generating means, and further illustrating alternative output connection apparatus; and

Fig. 7 is a schematic representation of another embodiment of the converter means, namely a relaxation oscillator circuit.

This invention is susceptible of embodiment in many different forms, and the present disclosure is to be considered as an exemplification of the principles of the invention and is not intended to limit the invention to the embodiments illustrated.

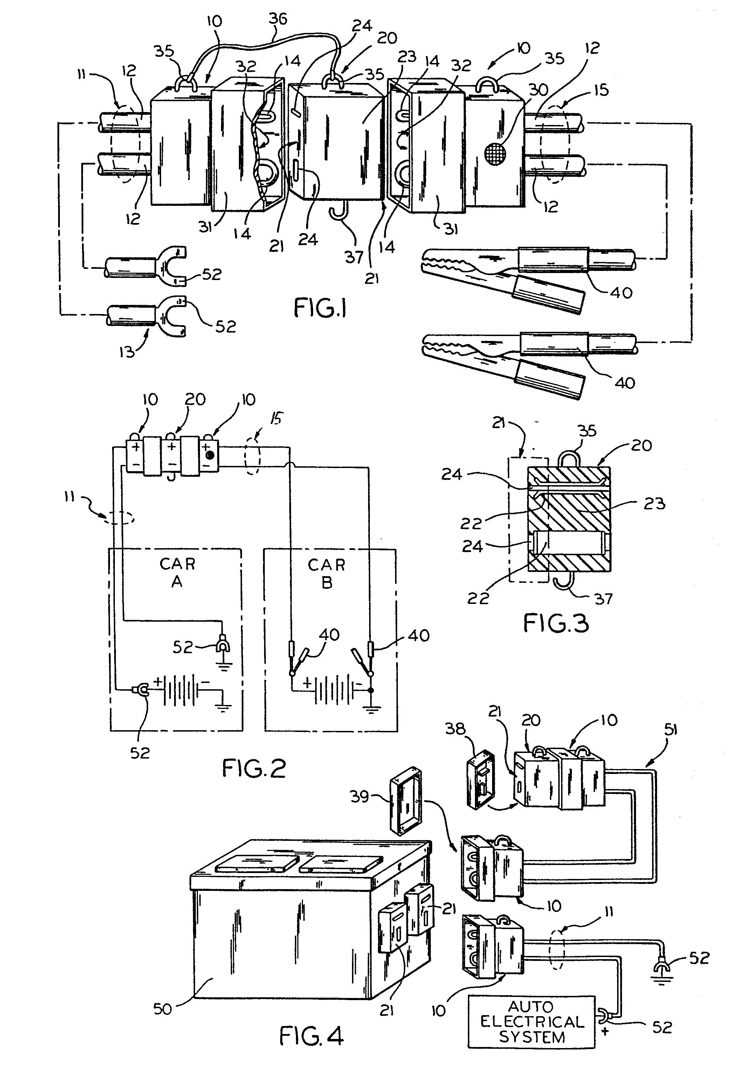

One embodiment and configuration of the improved battery access system is shown in Fig. 1. The system includes a first cable assembly, a connecting adapter, and a second cable assembly, each with appropriate respective connectors attached. Specifically, the first cable assembly consists of a first insulated electric cable 11, said cable
containing a multiplicity of electrical conductors 12 surrounded by suitable oil and gasoline resistant flexible insulation. First system connection means 13 are attached to a
first end of the first insulated electric cable 11, which in
Fig. 1 consist of electrically conducting lugs 52 designed
for permanent or semi-permanent attachment of the first cable
assembly to the electrical system of an automobile.

First male plug connection means 10 is attached to
the second end of the first insulated electric cable 11. This
male plug connection means 10 includes a multiplicity of male
electrically conducting prongs 14 which are connected respectively to the multiplicity of electrical conductors 12.
In the preferred embodiment, the male plug connection means
10 includes a pair of male electrically conducting prongs 14
situated orthogonally to one another in a geometrically
polarized manner, thereby permitting cooperation of the
resulting male plug connection means 10 with a cooperating
female plug connection means 21 in one physical and electrical orientation only.

The male plug connection means 10 further includes
an insulating shroud 31 extending from the perimeter of the
body of the male plug connection means 10 a distance substantially equal to or greater than the distance that said male
electrically conducting prongs 14 protrude from the body of
tne male plug 10. In this fashion, a protective insulating
cavity 32 is created which substantially encloses the male
electrically conducting prongs 14.

10

The system illustrated in Fig. 1 further includes a connecting adapter 20 for interconnecting a multiplicity of the aforedescribed male plug connection means 10. The connecting adapter 20 includes a multiplicity of female plug connection means 21 which are designed to cooperate with the male plug connection means 10. Each female plug connection means 21 further includes a multiplicity of female electrically conducting sockets 22 which are designed to slidably electrically engage the male electrically conducting prongs 14. As illustrated in Fig. 3, the preferred embodiment for the connecting adapter 20 includes a pair of female plug connection means 21 contained in a unitized body 23 formed of suitable insulating material. The female electrically conducting sockets 22 for each of the pairs of female plug connection means 21 are formed from unitized single pieces of suitable metallic conducting material, such as copper, thereby providing the requisite internal electrical connection, and are mounted within the body 23 of the connecting adapter 20 and recessed therein to provide electrical insulation and isolation. Apertures 24 passing through the body 23 permit the male electrically conducting prongs 14 to pass through and into the body 23 to electrically engage said recessed female sockets 22.

The system of Fig. 1 further illustrates a second male plug connection means 10 containing voltage polarity indicating means 30 within the body of the plug. This polarity indicating means 30 may in one embodiment comprise a visual warning output device, or in another embodiment, an audible output warning device, each designed to inform the operator when a condition of incorrect voltage polarity exists with respect to the electrical conductors 12 associated with the second insulated electric cable 15, which cable is attached at its first end to the second male plug connection means 10.

Second system connection means 41 are attached to the second end of the second insulated electric cable 15. In one embodiment, this second system connection means 41 comprises spring biased electrically conducting clamps 40, which are designed for rapid temporary connection of the second cable assembly to external devices, such as for jump starting an automobile which is not equipped with a permanent first cable assembly as described.

Flexible attachment mounting means 35 are attached to both the male plug connection means 10 and to the connecting adapter 20. In one embodiment, these flexible attachment mounting means 35 comprise loops, to which suitable flexible connecting means 36 are attached, thereby flexibly connecting the connecting adapter 20 to the male plug connection means 10, yet permitting them to be selectively engaged or disengaged. Storage attachment means 37 is attached to the connecting adapter 20 to facilitate storage within the engine compartment by securing the battery access system therein to the firewall or to other engine compartment equipment during periods between use.

Fig. 2 illustrates a typical application for the battery access system illustrated in Fig. 1. The first cable assembly is shown attached by means of electrically conducting lugs 52 to the electrical system of a first automobile, car A. The second cable assembly is shown connected in a temporary fashion by means of spring biased electrically conducting clamps 40 to the electrical system or battery of a second automobile, car B. The first and second male plug connection means 10 are then shown cooperating with the connecting adapter 20 to complete the electrical connection of the electrical systems of the two automobiles, cars A and B, while maintaining therebetween the correct respective voltage polarities as illustrated.

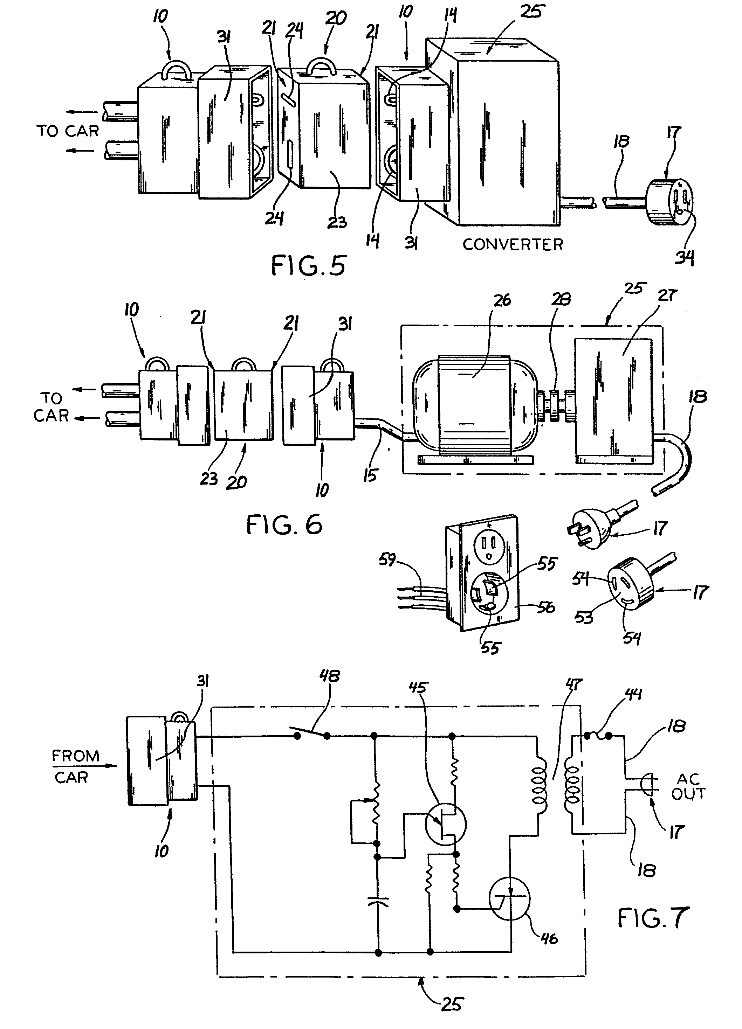

Fig. 4 illustrates yet another embodiment of the present invention which includes female plug connection means 21 integral to an electrical storage battery 50. Illustrated is the preferred embodiment wherein said storage battery 50 includes a multiplicity of said female plug connection means 21.

A first cable assembly consisting of a first insulated electric cable 11 terminated at its first end by male plug connection means 10 and at its second end by electrically conducting lugs 52 is provided for connecting the storage battery 50 to the electrical system of the automobile in cooperation with one of the female plug connection means 21 integral to the storage battery 50. A second cable assembly comprising an electrical extension means 51 is shown. This electrical extension means 51 includes a second insulated electric cable 15 terminated at both its first and second ends by male plug connection means 10. Connecting adapter 20 cooperates with one of the male plug connection means 10 to provide means for connection of external devices.

Fig. 4 further illustrates a male protective cap 38 with protruding tangs 43 designed to cooperate with and engage tne female plug connection means 21 and thereby protect the connection means from dirt and corrosion, and to provide additional insulation. Similarly, a female protective cap 39 is shown which is designed to engage the insulating shroud 31 of the male plug connection means 10, thereby substantially enclosing the cavity 32 and similarly insulating and protecting the male electrically conducting prongs 14.

Further representative embodiments of the present invention are illustrated in Figs. 5 and 6. In each, a converter means 25 is provided for converting a first electrical output of a given source into a second electrical output with differing electrical characteristics. The first electrical output is supplied to the converter by an insulated electric cable 15 which is connected at its first end to a male plug connection means 10, and which is connected at its second end to the converter 25. Connecting adapter 20 is further shown.

Output insulated electric cable 18 containing a multiplicity of electrical conductors is connected at its first end to the output of the converter means 25, and is further connected at its second end to output connection means 17. Output connection means 17 is designed for connecting the electrical output of the converter 25 to external electrical loads and devices and, as illustrated in Figs. 5 and 6, is susceptible of alternative embodiments.  In one embodiment illustrated in Fig. 5, the output connection means 17 comprises a standard female output socket means 34, into which standard appliance plugs may be inserted.

Another embodiment of the output connection means 17, as illustrated in Fig. 6, includes a first insulated connection plug means 53 attached to the second end of the output insulated electric cable 18.  This first insulated connection plug means 53 includes a multiplicity of first electrical contacts 54 which are connected to the multiplicity of conductors contained within the output electric cable 18. Insulated house plug means 56 are provided, which contains a multiplicity of second electrical contacts 55. These second electrical contacts 55 are designed to cooperate with the first electrical contacts 54 during engagement of the first insulated connection plug means 53 with the insulated house plug means 56, whereby the output of the converter 25 is supplied to the parallel power distribution system of the home by means of connecting wires 59 attached at their first end to the second electrical contacts 55 and at their second end to the parallel power distribution system of the home.

In one specific embodiment, the first insulated connection plug means 53 comprises a standard male electrical appliance plug 57, and the insulated house plug means 56 comprises a standard home wall outlet socket 58.  In this manner, the system may be attached by means of any existing standard outlet socket 58 to any home for emergency use, without the need for specialized home connectors.

15

Fig. 7 illustrates one embodiment of the converter means 25, namely a relaxation oscillator converter circuit. A relaxation oscillator including a unijunction transistor 45 is utilized to repetitively trigger a silicon controlled rectifier 46, which is connected in series with the input winding of an output transformer 47. This series connection is further connected via appropriate male plug connection means 10 to an input direct current power source. Switch 48 is included in series with the input power supply to permit the supply current to be selectively applied or removed from the converter 25.

The unijunction transistor 45 operating in conjunction with the silicon controlled rectifier 46 creates a substantially square wave signal which is applied to the input primary winding of the output transformer 47, whereby a similarly alternating output of differing voltage is produced at the output winding of the transformer 47. This output is connected by the output insulated electric cable 18 to the output connection means 17 as previously described.

Fig. 7 further illustrates the inclusion of a current limiting means 44 inserted in series with one electrical conductor of the output insulated electric cable 18, which in the preferred embodiment comprises an appropriate fuse or circuit breaker designed to limit the output current to a predefined maximum, such as 20 amps.

Because of the differing electrical power requirements of certain equipment, alternative converter means 25 may be required. Such an alternative converter is illustrated in Fig. 6, and comprises an electric motor 26 mechanically coupled to an electrical generating means 27 by appropriate coupling means 28. Power to the electric motor 26 is supplied by insulated electric cable 15. The rotational mechanical output of the motor 26 is connected to the rotational input shaft of the generating means 27 by coupling means 28, which may comprise conventional speed altering transmission means, frictional or mechanical clutch means, or other connection means. In the preferred embodiment, the electric motor 26 consists of a twelve volt direct current shunt motor, and the electrical generating means 27 comprises an electrical alternator designed to output alternating current whose frequency and peak to peak voltage are substantially equal to those of the standard power utility supply.

The foregoing description and drawings merely explain and illustrate the invention and the invention is not limited thereto, except insofar as the appended claims are so limited, as those skilled in the art having the disclosure before them will be able to make modifications and variations therein without departing from the scope of the invention.

CLAIMS:

1.   An improved system for accessing and utilizing automotive and other battery electrical system, including a first insulated electric cable (11) with a multiplicity of electrical conductors (12), said first cable (11) being connected at its first end to a first electrical system by first system connection means (13), with first male plug connection means (10) being attached to the second, free end of said cable (11), wherein said male plug connection means (10) contains a multiplicity of male electrically conducting prong means (14) connected respectively to said multiplicity of conductors (12), said prong means (14) being geometrically polarized for permitting connection to a cooperating female plug connection means (21) in one orientation only, said system further including second insulated cable means (15) with a multiplicity of conductors (12), with second male plug connection means (10) connected to the first end of said second cable means (15), and with second system connection means attached to the second end of said second cable means (15), and said system further including a connecting adaptor means (20) for connecting two or more of said male plug connection means so as to electrically connect said first insulated electric cable (11) with said second electric cable (15) while maintaining respective electric polarities therebetween, said system characterized in that it further comprises:

      - polarity indicating means (30) contained in said second male plug connection means (10) and attached between at least two of said multiplicity of electrical conductors (12) such that said indicating means produced a first given output when a first of said at least two conductors is at a positive potential with respect to a second of said at least two conductors, and produces a second and differing given output when said first of said at least two conductors is at a negative potential with respect to said second of said at least two conductors;

- female plug connection means (21) for cooperating with said male and differing connection means (10), said female plug connection means (21) including a multiplicity of female electrically conducting socket means (22) designed and oriented to slidably engage and electrically contact said male electrically conducting prong means (14), said socket means (22) being substantially encased and recessed within suitable insulating material forming the body (23) of said female plug connection means, with apertures (24) passing through said insulating body (23) proximate to said female electrically conducting socket means (22), whereby said male prong means (14) may pass through said apertures (24) and into said insulating body (23) to engage said female socket means (22) as described:

- said connecting adaptor means (20) comprising a multiplicity of said female plug connection means (21) wherein said insulating bodies (23) are integrated to form a single assembly, and wherein said corresponding electrically conducting female socket means (22) are internally electrically connected; and

- insulating shroud means (31) connected to said male plug connection means (10), said shroud means (31) extending from the periphery of the body of said male plug means (10) a distance substantially equal to or greater than the protruding length of said male electrically conducting prong means (14), whereby a recessed cavity (32) is created, said cavity being open at one end to receive said cooperating female plug connection means (21), and being formed at its sides by said insulating shroud means (31) and at its base by said body of said male plug connection means (10), said male prong means (14) being thereby substantially enclosed within said catity (32).

2.    The improved system of Claim 1 wherein said system further comprises flexible attachment mounting means (35) attached to said male plug connection means (10), and flexible attachment mounting means (35) attached to said connecting adapter means (20), whereby said connecting adaptor means (20) may be flexibly connected to said male plug connection means (10) by suitable flexible connecting means (36) passing through or attached to said flexible attachment mounting means (35), thereby permitting said adapter means (20) to be selectively engaged or disengaged from said male plug connection means (10) yet attached to and retained in the proximity of said male plug connection means (10).

3.    The improved system of Claim 1 whrein said polarity indicating means comprises light emitting diode means.

4.    The improved system of Claim 1 wherein said system further comprises:

    - converter means (25) for converting the first electrical output of said automotive electrical system to a second electrical output of differing electrical characteristics;

output connection means (17) for connecting said second electrical output of said converter means (25) to external loads; and

- output insulated electric cable means (18) with a multiplicity of electrical conductors, said output insulated electric cable means (18) being attached at its first end to the output of said converter means (25), and attached at its second end to said output converter means (17).

5.      The system of Claim 4 wherein said converter means (25) comprises:

- electrical motor means (26);

- electrical generating means (27); and

- coupling means (28) coupling the rotating output shaft of said electrical motor means (26) to the rotatable input shaft of said electrical generating means (27).

6.      The system of Claim 4 wherein said converter means (25) comprises relaxation oscillator means, said relaxation oscillator including a unijunction transistor means (45) cooperating with silicon controlled rectifier means (46) to produce a controllable frequency alternating electrical signal from said first electrical source, said alternating current electrical signal being further applied to transformer means (47) to obtain said second electrical output.

7.      The system of Claim 4 wherein said output connection means (17) comprises:

- first insulated connection plug means (53), said first insulated connection plug means (53) including a multiplicity of first electrical contacts (54) connected to said multiplicity of conductors of said output insulated electric cable (18);

- insulated house plug means (56) said house plug means (56) including a multiplicity of second electrical contacts (55) designed to cooperate with and electrically engage said first electrical contacts (54) of said first insulated connection plug means (53), said second electrical contact means (55) being substantially protected and insulated by the housing of said house plug means (56), and said house plug means (56) being designed to cooperate with said insulated connection plug means (53) to allow the electrical engagement of said first and second multiplicity of electrical contacts (54, 55); and

- said multiplicity of second electrical contacts (55) of said insulated house plug means (56) being connected to the parallel power distribution wiring system of a structure to provide access to and to permit the energization of said wiring system.

8.    An improved system for accessing and utilizing automotive and other storage batteries, said improved system including electrical storage battery means (50) and access and connection means including insulated electric cable means (11), said cable having a multiplicity of electrical conductors (12) surrounded by suitable flexible insulating materials, with male plug connection means (10) attached to the first end

22

of said insulated electrical cable means (11), said male plug connection means (10) containing a multiplicity of said male electrically conducting prong means (14) connected respectively to said multiplicity of electrical conductors (12), said prong means (14) being further geometrically polarized to permit connection to a cooperating female plug connection means (21) in one orientation only, and with system connection means (13) attached to the second end of said insulated electric cable means (11), said system being characterized by further comprising:

- One or more cooperating female plug connection means (21), said female plug connection means (21) including a multiplicity of female electrically .conducting socket means (22) designed and oriented to slidably engage and cooperate witn said male prong means (14);

- said female plug connection means (21) being integral to said electrical storage battery means (50) and designed to permit attachment of said male plug connection means (10); and

- said female electrically conducting socket means (22) of said female plug connection means (10) being internally connected to the power collection and distribution bus of said electrical storage battery means (50), whereby said integral female plug connection means (21) provide access to the electrical capacity of said electrical storage battery means (50).

9.    The improved system of Claim 8 wherein said system further includes electrical extension means (51), said extension means (51) comprising:

- second insulated electric cable means (15) with a multiplicity of electrical conductors (12);

- male plug connection means (10) attached to the first end of said insulated electrical cable means (15);

- male plug connection means (10) attached to the second end of said insulated electrical cable means (15); and

- connecting adaptor means (20), said adapter means (20) including a multiplicity of female plug connection means (21) with a multiplicity of electrically conducting socket means (22) for cooperating with and connecting two or more of said male plug connection means (10) so as to electrically connect them while maintaining respective electrical polarities therebetween.

10.     The improved system of Claim 8 wherein said system connection means (13) attached to said insulated electric cable means (11) comprises electrically conducting lug means (52) for permanent or semi-permanent attachment to the electrical system of a vehicle, whereby said male plug connection means (10) connected to the first end of said insulated electric cable means (11) cooperates with said female plug connections means (21) integral to said electrical storage battery means (50) to provide insulated, plugwise, correct voltage polarity connection of said electrical storage battery means (50) to said vehicle's electrical system.

0100383

FIG.1

FIG.2

FIG.3

FIG.4

AUTO
ELECTRICAL
SYSTEM

FIG.5

FIG. 6

FIG.7

0100383

European Patent Office

**EUROPEAN SEARCH REPORT**

Application number

EP 82 30 4099

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 272 142 (R.L.ZAPF) *Abstract; figure* | 1 | H 01 R 13/64 B 60 R 16/02 H 01 M 2/34 H 02 J 7/00 |
| D,Y | US-A-4 157 492 (N.P.COLBRESE) *Abstract; figure* | 1 | |
| A | US-A-4 258 305 (R.E.ANGLIN) *Abstract; figures* | 1 | |
| A | US-A-3 710 224 (J.F.DANIELS) *Column 3, lines 26-33; figures* | 1,4 | |
| A | DE-A-2 028 012 (H.TUPPECK) *The whole document* | 1,8 | |
| A | US-A-4 079 304 (J.D.BRANDENBURG) *Column 2, lines 22-64; figures* | 1 | TECHNICAL FIELDS SEARCHED (Int. Cl. ³) H 01 M 2 H 01 M 10 H 02 J 7 B 60 R 16 H 01 R 13 H 01 R 31 |

The present search report has been drawn up for all claims

| Place of search THE HAGUE | Date of completion of the search 26-04-1983 | Examiner RAMBOER P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82